Europäisches Patentamt

European Patent Office

Office européen des brevets

(19)

(11) Numéro de publication: **0 083 290**
A2

(12)

# DEMANDE DE BREVET EUROPEEN

(21) Numéro de dépôt: **82420180.0**

(22) Date de dépôt: **17.12.82**

(51) Int. Cl.³: **A 01 C 7/02**

(30) Priorité: **30.12.81 FR 8124656**

(43) Date de publication de la demande:
**06.07.83 Bulletin 83/27**

(84) Etats contractants désignés:
**AT BE CH DE GB IT LI NL SE**

(71) Demandeur: **Semet, Jean**
**Chambilly**
**F-71110 Marcigny(FR)**

(72) Inventeur: **Semet, Jean**
**Chambilly**
**F-71110 Marcigny(FR)**

(74) Mandataire: **Maureau, Bernard**
**Cabinet GERMAIN & MAUREAU Le Britannia - Tour C 20,**
**Boulevard Eugène Déruelle**
**F-69003 Lyon(FR)**

(54) **Semoir.**

(57) Ce semoir comporte en combinaison : une trémie (3) contenant les graines, un organe distributeur (10, 19) placé en aval de cette trémie, un organe régulateur (14) déterminant le débit des graines de la trémie à l'organe distributeur et un petit moteur électrique inclus dans un carter (1) auquel il transmet des vibrations et sur lequel est montée la trémie précitée.

FIG.1

EP 0 083 290 A2

1

L'invention a pour objet un semoir.

S'il existe des semoirs facilitant les semailles dans les entreprises agricoles à forte production, il n'en est par contre pas de même pour les petits producteurs ou les amateurs, qui doivent toujours semer en déposant les graines sur le sol, soit de façon disparate à la volée, soit de façon plus régulière, en plaçant les graines par exemple dans des raies ou dans des trous. Cette absence de petits semoirs est une lacune que l'invention pallie.

Elle a pour objet, à cet effet, un semoir comportant, en combinaison, une trémie contenant les graines, un organe distributeur placé en aval de cette trémie, un organe régulateur déterminant le débit des graines de la trémie à l'organe distributeur et un petit moteur électrique inclus dans un carter auquel il transmet des vibrations et sur lequel est montée la trémie précitée.

Le simple fonctionnement du moteur engendre des vibrations qui se répercutent dans la trémie et provoquent une descente progressive, mais régulière, des graines jusqu'à l'organe distributeur qui étant lui-même animé de vibrations réalise, grâce à ces vibrations, une distribution régulière mais éparpillée des graines. Quant à l'organe régulateur interposé entre la trémie et l'organe distributeur, il permet de régler la distribution des graines en fonction de la densité selon laquelle elles doivent être déposées sur le sol et en fonction de la vitesse avec laquelle l'utilisateur se déplace.

Divers agencements sont possibles et peuvent être employés au gré de l'utilisateur.

Suivant le mode adopté pour déposer les graines sur le sol, l'organe distributeur peut en effet présenter des formes et des agencements différents. C'est ainsi que suivant une forme d'exécution, le distributeur présente une forme générale de tube, dont l'une des extrémités comporte des moyens de fixation amovible à la sortie de l'organe régulateur de débit, et dont l'autre extrémité ouverte est avantageusement aplatie.

Suivant une forme d'exécution, le distributeur présente une forme de palette, de forme générale rectangulaire qui, placée dans un plan sensiblement perpendiculaire à l'axe longitudinal du régulateur de débit, comporte un rebord périphérique interrompu sur une certaine longueur, pour servir précisément à la distribution des graines.

Des moyens amovibles peuvent bien entendu être prévus pour permettre d'adapter, au gré de l'utilisateur, divers dispositifs distributeurs sur l'extrémité inférieure, c'est-à-dire celle aval, de l'organe régulateur de débit.

L'invention sera bien comprise d'ailleurs à l'aide de la description qui suit, en référence au dessin schématique annexé représentant, à titre d'exemple non limitatif, une forme d'exécution de ce semoir :

Figure 1 en est une vue générale en perspective, le semoir étant équipé d'un distributeur permettant soit de déposer les graines à la volée, soit de les déposer suivant des raies relativement larges;

Figure 2 est une vue en perspective du même semoir lorsqu'il est équipé d'un distributeur en forme de canne permettant la distribution de graines en les déposant suivant des raies de faible largeur;

Figure 3 est, à plus grande échelle, une vue en coupe verticale de son régulateur de débit.

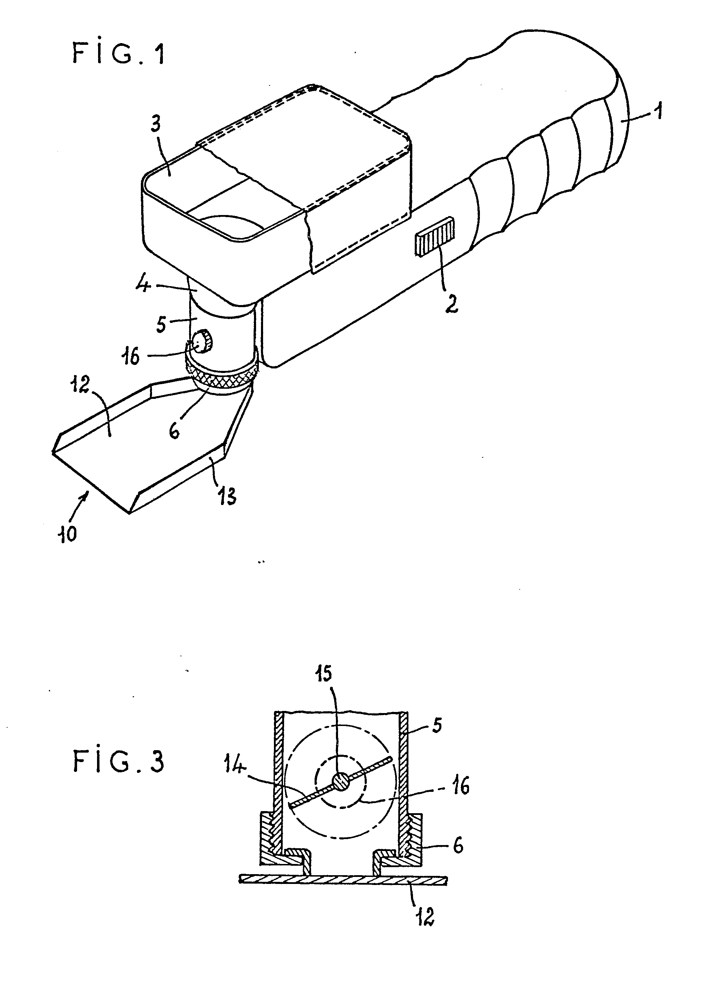

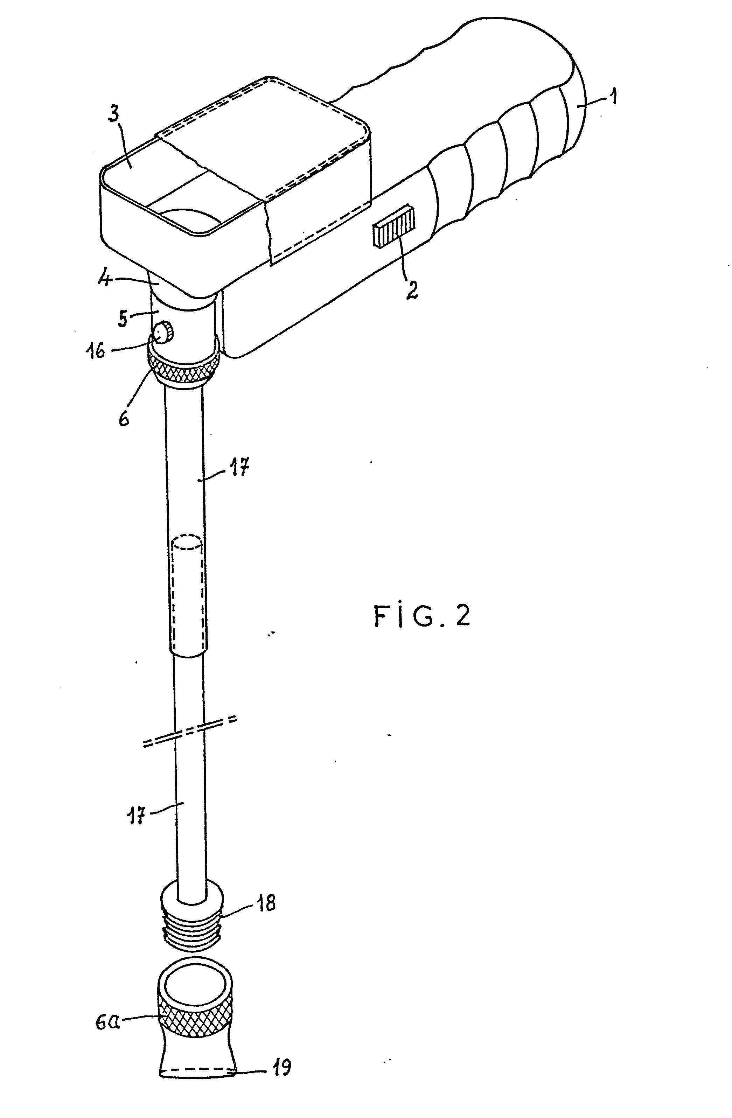

Aux figures 1 et 2, (1) désigne un carter dans lequel est inclus un moteur électrique qui n'est pas visible au dessin et dont le fonctionnement est commandé par manoeuvre d'un bouton poussoir (2). Comme cela est connu en soi, ce moteur électrique, qui est avantageusement alimenté par des piles, est conçu dans le but de produire des vibrations et ce par l'intermédiaire d'un dispositif excentrique qu'il entraîne très rapidement en rotation.

Sur ce carter (1) est fixé un corps parallélépipédique (3) destiné à jouer le rôle de trémie. Ce corps présente en effet latéralement, par rapport au carter (1), un col (4) dirigé vers le bas et se terminant par un

3

manchon tubulaire (5). Ce manchon comporte un filetage extérieur servant au vissage d'une bague moletée (6) qui constitue le moyen de fixation amovible d'un organe distributeur.

Dans le cas représenté à la figure 1, cet organe distributeur est constitué par une palette (10) comportant un fond (12) et un rebord (13). Cette palette est située dans un plan sensiblement perpendiculaire à l'axe du col (4) et du manchon (5); son rebord (13) s'étend sur trois de ses côtés; et c'est dans une zone fermée par ce rebord que le manchon (5) permet la communication de la palette (10) avec la trémie (3).

Entre la trémie (3) constituant la réserve de graines et la palette (10) constituant l'organe distributeur des graines est placé un organe régulateur du débit des graines. Cet organe est constitué par exemple par un volet (14) placé transversalement à l'intérieur du manchon (5) et dont la position dans ce manchon est règlable grâce à un axe (15) portant à l'une de ses extrémités un bouton de règlage (16) situé à l'extérieur du manchon (5).

Le mode d'utilisation de ce semoir se conçoit aisément; le volet (14) étant en position de fermeture, c'est-à-dire obstruction du manchon (5), et la trémie (3) étant garnie de graines, il suffit de mettre en fonctionnement le moteur électrique par manoeuvre du bouton poussoir (2) et d'ouvrir le volet (14) par manoeuvre du bouton (16) pour provoquer la descente progressive des graines jusqu'à la palette (10) ; et cette palette, en raison des vibrations que le moteur électrique lui transmet par l'intermédiaire du carter (1) , de la trémie (3) et du manchon (5) permet de distribuer les graines sur le sol, avec la certitude que ces graines sont déposées à l'état suffisamment écarté les unes des autres. La densité des graines sur le sol est cependant règlable; ce règlage ne nécessite que d'ouvrir plus ou moins le volet (14) à l'intérieur du manchon (5); il suffit pour cela de tourner plus ou moins

4

le bouton de règlage (16).

La palette (10) constitue un organe distributeur permettant notamment de semer à la volée et de déposer les graines suivant de larges raies sur le sol.

Dans le cas où les graines doivent être déposées suivant des raies fines ou relativement fines, il est préférable d'utiliser un organe distributeur conforme à celui représenté à la figure 2. L'organe distributeur consiste alors en un tube relativement long et télescopique (17), dont l'extrémité supérieure est raccordée au manchon tubulaire (5) par une bague moletée (6); et à son extrémité inférieure, le tube (17) se termine par un embout fileté (18) identique au manchon supérieur (5). Sur cet embout (18) se visse une bague moletée (6a) permettant la fixation de l'organe distributeur. Cet organe peut consister par exemple en une palette identique à celle précédente (10) ou en une tête à ouverture méplate (19).

Cette deuxième forme d'exécution a l'avantage de permettre à l'utilisateur de semer sans être obligé de se baisser.

Comme il va de soi, l'invention ne se limite pas aux formes d'exécution de ce semoir qui ont été ci-dessus indiquées à titre d'exemples; elle en embrasse, au contraire, toutes les variantes de réalisation, quels que soient notamment les agencements de l'organe régulateur de débit et de l'organe distributeur; et elle étend notamment son champ d'application au cas où le semoir est équipé de moyens permettant d'assembler entre eux plusieurs semoirs, en vue de la réalisation passagère d'un semoir de plus grandes dimensions.

5

## REVENDICATIONS

1.- Semoir, caractérisé en ce qu'il comporte en combinaison : une trémie (3) contenant les graines, un organe distributeur (10, 19) placé en aval de cette trémie, un organe régulateur (14) déterminant le débit des graines de la trémie à l'organe distributeur et un petit moteur électrique inclus dans un carter (1) auquel il transmet des vibrations et sur lequel est montée la trémie précitée.

2.- Semoir selon la revendication 1, caractérisé en ce que son organe distributeur est constitué par une palette (10) ayant une forme générale rectangulaire et placée dans un plan sensiblement perpendiculaire à l'axe longitudinal du régulateur de débit (5, 14), cette palette comportant un rebord périphérique interrompu sur une certaine longueur pour servir à la distribution des graines.

3.- Semoir selon la revendication 1, caractérisé en ce que son organe distributeur est constitué par une tête à ouverture méplate (19).

4.- Semoir selon l'une quelconque des revendications 1 à 3, caractérisé en ce qu'entre l'organe régulateur de débit (14) et l'organe distributeur (10, 19) est interposé un tube (17).

5.- Semoir selon la revendication 4, caractérisé en ce que le tube (17) est télescopique.

FİG.1

FİG.3

FIG.2